# EUROPÄISCHE PATENTSCHRIFT

(11) **EP 2 817 464 B1**
(45) Veröffentlichungstag und Bekanntmachung des Hinweises auf die Patenterteilung: **16.08.2017**
(21) Anmeldenummer: 13704052.3
(22) Anmeldetag: 06.02.2013
(51) Int. Cl.: B29C 65/46, B29C 65/48, B29C 65/50, E04D 5/14, E04D 15/04, H05B 6/10, H05B 6/14

(54) **GERÄT ZUM VERKLEBEN ODER VERSCHWEISSEN EINER DACHBAHN**
DEVICE FOR BONDING OR WELDING A ROOF MEMBRANE
APPAREIL DESTINÉ À COLLER OU SOUDER UNE MEMBRANE POUR TOITURE

(30) Priorität: 21.02.2012 DE 102012101380
(43) Veröffentlichungstag der Anmeldung: 31.12.2014
(73) Patentinhaber: SFS Intec Holding AG, 9435 Heerbrugg (CH)
(72) Erfinder: GASSER, Daniel, CH-9444 Diepoldsau (CH); SIEBER, Sven, CH-9444 Diepoldsau (CH); OESCH, Sonja, CH-9463 Oberriet SG (CH)
(86) Internationale Anmeldenummer: PCT/EP2013/052257
(87) Internationale Veröffentlichungsnummer: WO 2013/124148

(56) Entgegenhaltungen:
- WO-A1-93/18247
- US-A- 4 978 825
- US-B1- 8 080 117

## Beschreibung

Die Erfindung betrifft ein einteiliges Gerät zum Verkleben oder Verschweißen einer Dachbahn, insbesondere auf einem Flachdach, mit einem Fahrgestell zum Abstützen des Gerätes auf der Dachbahn in einem Kontaktpunkt, der durch ein Andrückelement zum Andrücken der Dachbahn an ein mit ihr zu verklebendes oder zu verschweißendes Bauteil gebildet ist, und in wenigstens einem weiteren Kontaktpunkt und/oder einer Kontaktlinie, die durch eine Laufrolle bzw. -walze zum Verfahren des Gerätes gebildet sind, mit einer steuerbaren elektrischen Heizeinrichtung, mit der die Dachbahn und wenigstens das Bauteil in einen kleb- oder schweißbaren Zustand bringbar ist, und mit einem sich von dem Fahrgestell nach oben erstreckenden Rahmen, mit dem das Gerät manövrierbar ist.

Ein solches Gerät ist aus dem Dokument US 5 624 511 A bekannt. Das bekannte Gerät dient zum Verschweißen von überlappenden Randabschnitten von schweißbaren Materialien wie z.B. Dachfolien. Das Gerät hat einen Rahmen, an welchem ein elektrischer Heizkörper so befestigt ist, dass er zwischen den einander überlappenden Rändern von zwei Folien positionierbar ist, um beide zu erhitzen und so in einen schweißbaren Zustand zu bringen. Ein Ausrichtungssteuermechanismus drückt die überlappende Folie in eine gewünschte Ausrichtung relativ zu der überlappten Folie. Eine Andrückrolle dient zum Zusammendrücken der erhitzten Folienabschnitte, um diese miteinander zu verschweißen. In diesem Fall ist die zu verschweißende Dachbahn eine Folie und das Bauteil, mit dem diese zu verschweißen ist, ist ebenfalls eine Folie. Das bekannte Gerät ist nicht zum Verschweißen einer Dachbahn mit einem Bauteil geeignet, bei dem es sich um einen Teller handelt, der unterhalb der Dachbahn irgendwo, aber nicht am Rand derselben angeordnet ist. Der Heizkörper kann nämlich nur am Rand der Dachbahn zwischen diese und einem mit ihr zu verschweißendes Bauteil eingeführt werden. Heutzutage werden aber Dachbahnen in großen Flächen auf Dächern mit Tellern verklebt oder verschweißt, die unter der gesamten Dachbahn in einem vorzugsweise regelmäßigen Raster angeordnet und mit einem Unterbau fest verbunden sind. Die Mehrheit von solchen Tellern wäre daher für einen elektrischen Heizkörper, wie er bei dem bekannten Gerät eingesetzt wird, unzugänglich.

Teller der vorgenannten Art sind z.B. aus dem Dokument US 6 640 511 B1 bekannt. Solche Teller sind an ihrer oberen Seite mit einer Beschichtung versehen, welche durch Erwärmung des Tellers in einen kleb- oder schweißbaren Zustand versetzbar ist, um mit dem Teller eine Dachbahn verschweißen zu können.

Zum Verschweißen von Dachbahnen mit solchen Tellern gibt es im Stand der Technik Schweißgeräte, die mit Induktion arbeiten. Es handelt sich üblicherweise um Standgeräte, die über der vermuteten Position des Tellers auf die Dachbahn aufgesetzt werden. Mit Hilfe einer Induktionsspule wird der Teller erhitzt, um dadurch eine Beschichtung des Tellers in einen kleb- oder schweißbaren Zustand zu versetzen, in welchem der Teller mit der darüber liegenden Dachbahn oder -folie verklebbar oder verschweißbar ist. Ein Gerät dieser Art ist aus dem Dokument US 2009/0321423 A1 bekannt. Die Handhabung dieses Geräts ist mit hohem Kraftaufwand verbunden, weil das gesamte Gerät von Teller zu Teller jeweils angehoben und wieder abgesetzt werden muss Bei diesem Gerät erwärmt sich die Induktionsspule im Betrieb sehr stark. Deshalb ist bei diesem Gerät die Wärmeabfuhr von der Induktionsspule ein Problem. Bei diesem Gerät muss daher nicht nur das Gehäuse, in welchem die elektrische Steuereinrichtung für die Induktionsspule untergebracht ist, sondern auch ein Fuß, in welchem die Induktionsspule untergebracht ist, mit speziellen Kühlkörpern für eine wirksame Wärmeabfuhr versehen werden.

Aus dem Dokument US 7 399 949 B2 ist ein weiteres Gerät der vorgenannten Art bekannt, das von Teller zu Teller getragen werden muss und bei dem ebenfalls ein hoher Aufwand zur Wärmeabfuhr erforderlich ist.

Zur Lösung des Problems des hohen Kraftaufwands bei der Handhabung des Gerätes sind bereits Geräte entwickelt worden, die zweiteilig ausgebildet sind. Bei solchen Geräten wird ein gesonderter Induktionskopf eingesetzt, der über ein Kabel mit einer Steuereinheit verbunden ist, die in einem gesonderten Gehäuse untergebracht ist, das verfahrbar sein kann. Ein solches Gerät ist beispielshalber aus dem Dokument US 6 229 127 B1 bekannt. Nachteilig ist bei den Geräten mit gesondertem Induktionskopf, dass die Bedienungsperson, die den Induktionskopf handhabt, auf den Knien arbeiten muss.

Bei einem ähnlichen zweiteiligen Gerät, das aus dem Dokument US 5 526 624 bekannt ist, sind zwei Induktionsköpfe vorgesehen, von denen einer mit Hilfe einer Walze, um deren Achse er kippbar ist, verfahrbar ist, wohingegen der andere Induktionskopf tragbar ausgebildet ist, also mühsam von Schweißstelle zu Schweißstelle getragen und jeweils von Hand abgesetzt und wieder aufgenommen werden muss. Beide Induktionsköpfe sind jeweils über ein Kabel mit einer Steuereinheit verbunden, die in einem gesonderten Gehäuse untergebracht ist, das verfahrbar ist und hinter den Schweißköpfen hergezogen werden muss.

Schließlich ist zur Verbesserung des Wirkungsgrades von solchen Geräten mit separatem Induktionskopf bereits eine Schaltung entwickelt worden, die mit Hilfe einer speziellen Suchspule oder aber mit Hilfe der Induktionsspule selbst erlaubt, auf elektrischem Wege die genaue Position der Teller unter einer Dachbahn zu ermitteln, damit der Induktionskopf zentrisch auf jeden Teller aufgesetzt werden kann, bevor der Klebe- oder Schweißvorgang eingeleitet wird. Geräte mit gesondertem Induktionskopf, bei denen vor dem Schweißen zunächst die genaue Position des Tellers relativ zu der Induktionsspule ermittelt wird, sind z.B. aus den Dokumenten JP 5-315064 A und JP 6-111924 A bekannt.

Üblicherweise wird bei den bekannten Dachbahninduktionsschweißgeräten nach jedem Klebe- oder Schweißvorgang, sobald das Schweißgerät oder der Induktionskopf von dem Teller, der gerade erhitzt worden ist, wegbewegt worden ist, ein an einer separaten Stange befestigter Magnet auf den Teller aufgesetzt und dort solange belassen, bis die Klebe- oder Schweißstelle abgekühlt ist.

Die WO 93/18247 zeigt ein Induktionsgerät, mit dem Dachbahnen miteinander verschweißt werden. Zu diesem Zweck sind in den Dachbahnen Metallnetze aufgenommen, welche die durch die Induktion hervorgerufene Erwärmung bewirken. Der Generator zum Erzeugen der für die Induktion erforderliche Wechselspannung ist als externes Gerät ausgebildet, wird also nicht von dem verfahrbaren Gerät getragen. Bei dem Generator handelt es sich zudem um einen wassergekühlten Generator, also um ein vergleichsweise schweres Gerät.

Aufgabe der Erfindung ist es, ein einteiliges Gerät der eingangs genannten Art so auszubilden, dass es im Einsatz leichter und sicherer handhabbar ist und mit wesentlich weniger Aufwand, insbesondere auch hinsichtlich der Wärmeabfuhr, bessere Klebe- oder Schweißergebnisse liefert.

Diese Aufgabe ist erfindungsgemäß ausgehend von einem einteiligen Gerät der eingangs genannten Art dadurch gelöst, dass das Andrückelement die als eine Induktionsspule ausgebildete Heizeinrichtung umfasst, mit der ein das Bauteil bildender, mit einem kleb- oder schweißbaren Belag versehener Metallteller erhitzbar ist, dass ein Induktionsgenerator sowie eine Steuer- und Kühleinrichtung desselben in bzw. an in einem Gehäuse angebracht sind, das mit Abstand oberhalb des Fahrgestells an dem Rahmen angebracht ist, und dass das Gerät mit dem Rahmen um eine Laufrollen- und/oder -walzenachse kippbar ist und in gekipptem Zustand verfahrbar ist.

Es gibt zwar bereits Geräte zum Verkleben oder Verschweißen einer Dachbahn, wie auch das Dokument US 5 624 511 A zeigt, aus dem ein einteiliges Gerät der eingangs genannten Art bekannt ist, jedoch arbeiten alle bislang bekannten Geräte dieser Art mit einer Heizeinrichtung, die als ein elektrischer Heizkörper (US 5 624 511 A), als ein Heißluftgebläse (US 5 110 398 A) od. dgl. ausgebildet ist. Mobile Erwärmungsvorrichtungen, die mit induktiver Erwärmung arbeiten, sind nach Kenntnis des Anmelders bislang nur entweder als einteilige Standgeräte eingesetzt worden (US 2009/0321423 A1 oder US 7 399 949 B2) oder als zweiteilige Geräte mit einem mühsam zu handhabenden Schweißkopf (US 6 229 127 B1 oder JP 5-315064 A). Das Gerät nach der Erfindung, das in gekipptem Zustand verfahrbar ist und mit dem Andrückelement über dem Teller abgesenkt wird, ist demgemäß viel einfacher und mit viel weniger Kraftaufwand handhabbar, obgleich es sich um ein einteiliges Gerät handelt. Es ist deshalb vorteilhaft bei einem Feldbefestigungssystem für Flachdächer einsetzbar, wo Hunderte oder Tausende von Tellern mit einer Dachbahn zu verkleben oder zu verschweißen sind.

Aus dem Dokument US 5 110 398 ist ein Gerät zum Verschweißen von Dachbahnen bekannt, welches eine Warmschweißeinrichtung zum Beaufschlagen von sich überlappenden Dachbahnen mit Schweißwärme und eine Fluid-auftragseinrichtung zum Einbringen eines Lösungs- oder Grundiermittels zwischen sich überlappende Dachbahnen aufweist, um eine Lösungsmittelverschweißung der Dachbahnen vorzunehmen oder um bei dem Vorbereiten der Dachbahnen für eine Warmverschweißung derselben zu helfen. Dieses bekannte Gerät ist zwar einteilig ausgebildet, hat aber wegen des Einsatzes von Lösungsmittel und Wärme notwendigerweise einen massiven Aufbau und dürfte deshalb schwierig lenkbar sein. Außerdem dürfte es erforderlich sein, dass dieses Gerät nach einem Schweißvorgang in einer dabei eingenommenen Position verbleiben muss, bis die Schweißstelle ausreichend ausgehärtet oder verfestigt ist. Zumindest müssen Heftrollen, die an der Vorderseite des Gerätes angebracht und durch neben ihnen befestigte Gewichte beschwert sind, die Dachbahnen nach dem Herstellen der Schweißungen fest gegeneinander pressen. Dadurch sollen Blasenbildungen oder Lufttaschen unter den Dachbahnen eliminiert und die Ausrichtung der Schweißnähte nach dem Herstellen der Schweißungen sowie eine richtige gegenseitige Ausrichtung der Dachbahnen aufrechterhalten werden.

In diesem Zusammenhang ist es ein wichtiger Vorteil des Gerätes nach der Erfindung, dass es nach einem Klebe- oder Schweißvorgang nicht in seiner dabei eingenommenen Position verbleiben muss, bis die Klebe- oder Schweißstelle ausreichend ausgehärtet oder verfestigt ist, sondern dass es die Bedienungsperson sofort zurück in eine Fahrstellung kippen und mit dem gekippten Gerät weiter in die nächste Position fahren kann, in der eine Dachbahn mit einem Teller oder Bauteil zu verkleben oder zu verschweißen ist.

Darüber hinaus ist das Gerät nach der Erfindung leicht lenkbar, auf geneigten Ebenen oder Dächern einsetzbar, sicher stoppbar ohne Wegrollgefahr und durch äußere Einwirkung wie z.B. Windböen nicht umkippbar. Bei dem Gerät nach der Erfindung ist zwar der Induktionsgenerator mit seiner Steuer- und Kühleinrichtung in einem Gehäuse oberhalb des Fahrgestells an dem Rahmen angebracht, in Kombination mit einem in Draufsicht eine große Fläche überdeckenden Fahrgestell ist jedoch der Schwerpunkt trotzdem ausreichend niedrig gelegen, um ein Umkippen des Gerätes auf schrägem Untergrund oder durch äußere Einwirkungen wie Windböen zu verhindern.

Bei einem Gerät, das aus dem Dokument US 8 080 117 B1 bekannt ist, ist zwar eine Stromversorgung oben an einem Bügel angebracht, jedoch ist dieses bekannte Gerät zum Verarbeiten von Asphaltzylindern ausgebildet, die jeweils ein Gewicht von cirka 50 kg haben. Auch dieses bekannte Gerät muss deshalb einen relativ massiven Aufbau haben. Es ist auf Luftreifen verfahrbar, die motorisch antreibbar sind. Eine Glättrolle drückt den auf Filzpapier tropfenden Asphalt an. Wenn die betreffende Bahn verlegt ist, wird das Gerät im Uhrzeigersinn soweit gekippt, bis es nur auf Leerlaufrädern ruht, damit die nächste Bahn gelegt werden kann. Ein Hubbügel am oberen Ende einer lasttragenden Säule ist als ein Hebezeugbefestigungspunkt ausgebildet, damit das Gerät auf einem Dach abgesetzt werden kann. Das Gerät ist also keinesfalls in gekipptem Zustand verfahrbar. Die Stromversorgung ist zwar oben an dem Bügel angebracht, dürfte aber dort wegen des dominierenden Gewichts des Asphaltzylinders für die Lage des Schwerpunkts überhaupt keine Rolle spielen. Hingegen hat das Gerät nach der Erfindung einen tief liegenden Schwerpunkt, der die Standfestigkeit des Gerätes in ungekipptem Zustand gewährleistet, aber das Kippen des Gerätes und dessen Verfahren in gekipptem Zustand erleichtert.

Vorteilhafte Ausgestaltungen des Gerätes nach der Erfindung bilden die Gegenstände der abhängigen Ansprüche.

In einer Ausgestaltung des Gerätes nach der Erfindung ist das Andrückelement durch einen Gelenkkopf ein- oder mehrdimensional gegenüber dem Fahrgestell beweglich. Dadurch wird die Anpassung des Andrückelements, d.h. dessen Parallelität zur Oberfläche der Dachbahn erleichtert und verbessert.

In einer weiteren Ausgestaltung des Gerätes nach der Erfindung ist das Andrückelement mit Kompensationselementen versehen, welche ein gleichmäßiges Aufliegen des Andrückelements auf der Dachbahn sicherstellen.

In einer weiteren Ausgestaltung des Gerätes nach der Erfindung ist das Andrückelement gefedert mit der Dachbahn in Kontakt bringbar. Für diesen Zweck kann eine Schraubenfeder zwischen Andrückelement und Fahrgestell eingesetzt werden. Eine Schraubenfeder ermöglicht nämlich einen Höhenausgleich und die Aufbringung eines vertikalen Drucks von dem Andrückelement aus auf die Dachbahn und weiter auf das Bauteil. Sehr hilfreich wäre in diesem Fall eine Kombination aus Kugelgelenk und Schraubenfeder. Eine solche Kombination würde die Parallelität und auch das Andrücken noch besser gewährleisten.

In einer weiteren Ausgestaltung des Gerätes nach der Erfindung ist das Andrückelement mit dem Fahrgestell auf die Dachbahn absenkbar. Dieses Absenken ergibt sich, wenn ein zum Verfahren gekipptes Gerät mit dem Andrückelement wieder auf die Dachbahn abgesenkt wird. Das Gerät übt dann über das Andrückelement die notwendige Kraft auf die Dachbahn und das Bauteil aus.

In einer weiteren Ausgestaltung des Gerätes nach der Erfindung ist wenigstens einer der Kontaktpunkte als ein Gleitpunkt ausgebildet und das Andrückelement ist von dem Fahrgestell aus auch auf die Dachbahn absenkbar ausgebildet. In dieser Ausgestaltung kann das Gerät auf der Dachbahn leicht verschoben werden. Wenn die richtige Position erreicht ist, die zuvor auf der Dachbahn ermittelt und markiert worden ist, kann das Andrückelement von dem Fahrgestell aus auf die Dachbahn mittels eines Teleskops oder mittels einer mechanischen Hebelkonstruktion abgesenkt werden.

In einer weiteren Ausgestaltung des Gerätes nach der Erfindung bildet das Fahrgestell in Draufsicht ein Dreieck, in dessen Ecken zwei Laufrollen und das Andrückelement angeordnet sind. Das ergibt eine Drei-Punkt-Auflage des Gerätes auf der Dachbahn, die das Andrücken der Dachbahn an das Bauteil durch das Andrückelement und den Kontakt der Dachbahn mit dem Bauteil gewährleistet.

In einer weiteren Ausgestaltung des Gerätes nach der Erfindung bildet das Fahrgestell in Draufsicht ein Dreieck, in dessen Ecken zwei Laufrollen und der Gleitpunkt angeordnet sind. Auch hier ist eine Drei-Punkt-Auflage mit den damit verbundenen Vorteilen vorhanden, wobei aber das Gerät zusätzlich leicht verschoben werden kann, d.h. nicht gekippt zu werden braucht, wenn die richtige Position des Andrückelements relativ zu dem unter der Dachbahn befindlichen Bauteil gesucht wird.

In einer weiteren Ausgestaltung des Gerätes nach der Erfindung bildet das Fahrgestell in Draufsicht ein Viereck, in dessen Ecken zwei Laufrollen und zwei Gleitpunkte angeordnet sind. In dieser Ausgestaltung überdeckt das Gerät eine größere Grundfläche, was die Kippsicherheit des Gerätes verbessert.

In einer weiteren Ausgestaltung des Gerätes nach der Erfindung ist das Andrückelement an einer Stelle innerhalb des Dreiecks an dem Fahrgestell angebracht. Das ermöglicht, das Andrückelement in einer von der Fahrbahn abgehobenen Position zu halten, solange das Gerät in nicht gekipptem Zustand auf der Dachbahn bewegt wird.

In einer weiteren Ausgestaltung des Gerätes der Erfindung ist das Andrückelement an einer Stelle außerhalb des Dreiecks an dem Fahrgestell angebracht. Das ermöglicht eine von der Ausbildung des Fahrgestells weitgehend unabhängige Ausbildung einer Auslegerkonstruktion, welche das Andrückelement trägt.

In einer weiteren Ausgestaltung des Gerätes nach der Erfindung ist das Andrückelement an einer Stelle innerhalb des Vierecks an dem Fahrgestell angebracht. Diese Ausgestaltung bietet im Wesentlichen die gleichen Vorteile und Möglichkeiten wie die oben genannte Ausgestaltung, bei der das Andrückelement an einer Stelle innerhalb des Dreiecks an dem Fahrgestell angebracht ist.

In einer weiteren Ausgestaltung des Gerätes nach der Erfindung ist das Fahrgestell als ein Ausleger ausgebildet, der an einem Ende mit dem Rahmen um die Laufrollen- und/oder - walzenachse schwenkbar ist und an seinem freien, anderen Ende das Andrückelement trägt. In dieser Ausgestaltung hat das Gerät ein Fahrgestell mit sehr einfachem Aufbau, bei dem der Ausleger wenig Platz- und Raumbedarf hat, so dass die Arbeitsmöglichkeiten bei dem Einsatz dieses Gerätes an hinsichtlich des Bauteils unzugänglichen oder kaum zugänglichen Stellen für ein Fahrgestell, das in Draufsicht dreieckig oder viereckig ist, wesentlich besser sind.

In einer weiteren Ausgestaltung des Gerätes nach der Erfindung trägt die Laufrollen- und/oder -walzenachse wenigstens eine Laufrolle und/oder wenigstens eine Laufwalze. Je nach den Gegebenheiten des Untergrunds unter der Dachbahn und auf der Arbeitsfläche auf der Dachbahn kann wahlweise mit einem Punkt- und/oder Linienkontakt zwischen Gerät und Dachbahn gearbeitet werden.

In einer weiteren Ausgestaltung des Gerätes nach der Erfindung ist der oder jeder Gleitpunkt als ein Abstützteller ausgebildet. Das ermöglicht eine großflächige Abstützung des Gerätes auf der Dachbahn zumindest in dem oder jedem Gleitpunkt.

In einer weiteren Ausgestaltung des Gerätes nach der Erfindung ist der Abstützteller an seiner Unterseite mit Erhöhungen für jeweils punktförmigen Kontakt mit einer Dachbahn versehen. In dieser Ausgestaltung des Gerätes nach der Erfindung lassen sich Unebenheiten der Dachbahn oder bei Bedarf ein flächenhafter Kontakt mit einer Dachbahn vermeiden.

In einer weiteren Ausgestaltung des Gerätes nach der Erfindung ist die Induktionsspule mit einer Positionssuchspule kombiniert. Üblicherweise wird die Bedienungsperson des Gerätes die Position des Tellers unter der Dachbahn mit dem Fuß ertasten und markieren. In Fällen, in denen das nicht möglich ist, ist eine Positionssuchspule hilfreich. In einer vereinfachten derartigen Kombination kann die Induktionsspule zugleich als Positionssuchspule eingesetzt werden.

Ausführungsbeispiele der Erfindung werden im Folgenden unter Bezugnahme auf die Zeichnungen näher beschrieben. Es zeigt
- Fig. 1: eine bevorzugte Ausführungsform des Gerätes nach der Erfindung in einer Vorderansicht,
- Fig. 2: die bevorzugte Ausführungsform des Gerätes nach der Erfindung in einer Draufsicht,
- Fig. 3: die bevorzugte Ausführungsform des Gerätes nach der Erfindung in einer Seitenansicht,
- Fig. 4: die bevorzugte Ausführungsform des Gerätes nach der Erfindung in einer perspektivischen Darstellung,
- Fig. 5: in einer schematischen Darstellung ein Fahrgestell, das in Draufsicht ein Dreieck bildet, in dessen Ecken zwei Laufrollen und ein Andrückelement angebracht sind,
- Fig. 6: eine erste Variante der Anbringung des Andrückelements an dem Fahrgestell nach Fig. 5,
- Fig. 7: eine zweite Variante der Anbringung des Andrückelements an dem Fahrgestell nach Fig. 5,
- Fig. 8: in einer schematischen Darstellung ein Fahrgestell, das in Draufsicht ein Dreieck bildet, in dessen Ecken zwei Laufrollen und ein Gleitpunkt angeordnet sind, wobei das Andrückelement an einer Stelle innerhalb des Dreiecks an dem Fahrgestell angebracht ist,
- Fig. 9: eine erste Variante der Anbringung des Andrückelements an dem Fahrgestell nach Fig. 8,
- Fig. 10: eine zweite Variante der Anbringung des Andrückelements an dem Fahrgestell nach Fig. 8
- Fig. 11: in einer schematischen Darstellung ein Fahrgestell, das in Draufsicht ein Viereck bildet, in dessen Ecken zwei Laufrollen und zwei Gleitpunkte angeordnet sind, wobei das Andrückelement an einer Stelle innerhalb des Vierecks an dem Fahrgestell angebracht ist,
- Fig. 12: in einer schematischen Darstellung eine weitere bevorzugte Ausführungsform des Gerätes nach der Erfindung, bei dem das Fahrgestell als ein Ausleger ausgebildet ist, der an einem Ende mit dem Rahmen um eine Laufrollenund/oder -walzenachse kippbar ist und an seinem freien, anderen Ende das Andrückelement trägt, und
- Fig. 13: in einer schematischen Schnittdarstellung den Einsatz eines Andrückelementes des Gerätes nach der Erfindung bei dem Verschweißen einer Dachbahn mit einem auf einem Dachunterbau befestigten metallischen Teller.

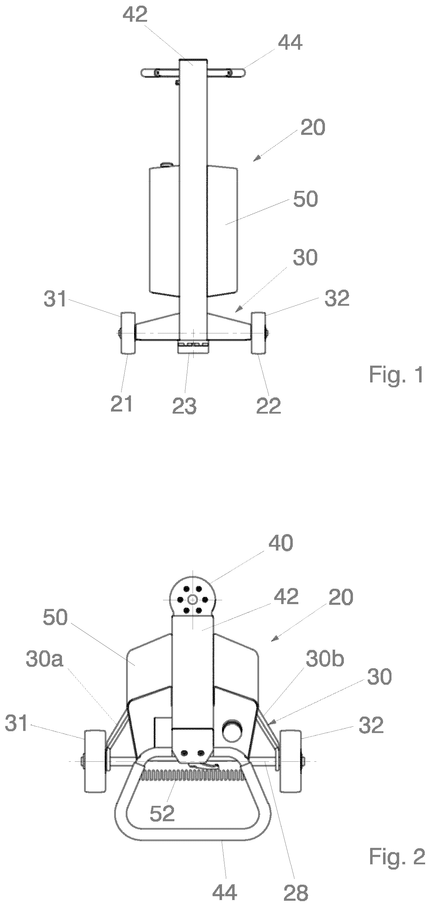

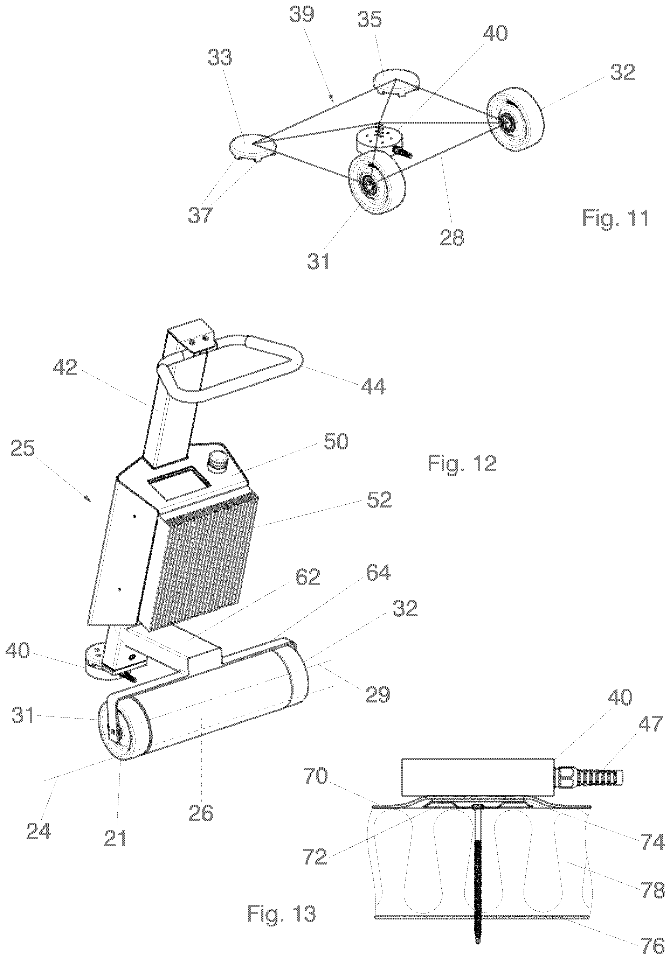

Eine bevorzugte Ausführungsform eines Gerätes nach der Erfindung zum Verkleben oder Verschweißen einer Dachbahn, insbesondere auf einem Flachdach, ist in den Fig. 1 - 4 in einer Vorderansicht, in einer Draufsicht, in einer Seitenansicht bzw. in einer perspektivischen Darstellung gezeigt und insgesamt mit 20 bezeichnet. Das Gerät 20 hat ein insgesamt mit 30 bezeichnetes Fahrgestell zum Abstützen des Gerätes 20 auf der Dachbahn (Fig. 13) in mehreren Kontaktpunkten 21, 22, 23 und/oder in einer Kontaktlinie 24 (Fig. 12). Bei dem Gerät 70 nach den Fig. 1 - 4 werden die Kontaktpunkte 21, 22 durch Laufrollen 31 bzw. 32 gebildet. Der Kontaktpunkt 23 wird durch ein Andrückelement 40 zum Andrücken der Dachbahn an ein unter ihr angeordnetes und mit ihr zu verklebendes oder zu verschweißendes Bauteil (Fig. 13) gebildet. Das zu verschweißende Bauteil kann ein mit einer kleb- oder schweißbaren Beschichtung versehener Teller sein, der beispielshalber auf dem Unterbau eines Flachdaches befestigt ist. Der hier verwendete Begriff "Kontaktpunkt" ist nicht wörtlich zu nehmen, denn die Laufrollen 31, 32 bilden eher kurze Kontaktlinien statt Kontaktpunkte. Verglichen mit der Länge der Kontaktlinie 24, die durch eine Laufwalze 26 gebildet wird, bilden die Laufrollen 31, 32 in erster Näherung aber jeweils einen Kontaktpunkt. Die Laufwalze 26 kann allein oder zusätzlich zu Laufrollen, welche auf einer gleichen Achse 29 angeordnet sind, vorgesehen werden.

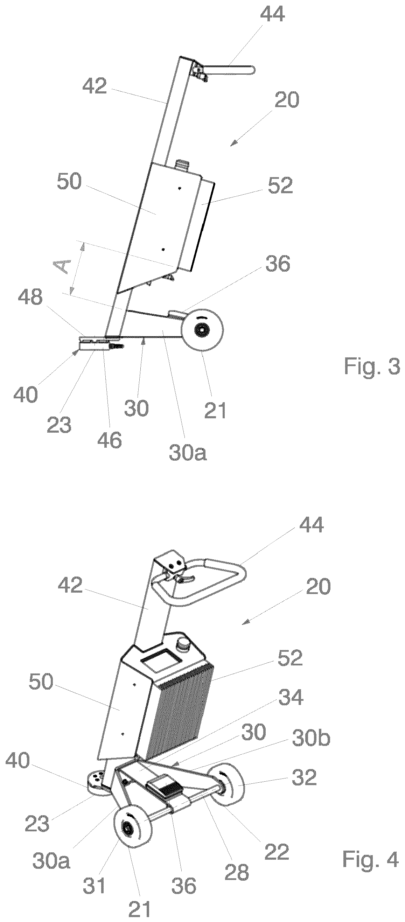

Das Fahrgestell 30 besteht bei dem Gerät 20 nach den Fig. 1 - 4 aus einem dreieckigen Rahmen mit zwei Rahmenschenkeln 30a, 30b und der Achse 28. Die Rahmenschenkel 30a, 30b und die Achse 28 sind zu einem starren Dreieckrahmen fest miteinander verbunden. Zwischen einer Rahmenecke und der Mitte der Achse 28 erstreckt sich eine Traverse 34. Die Traverse 34 trägt ein Auslösepedal 36, mit welcher ein elektrischer Schalter (nicht sichtbar) betätigbar ist. Auf den äußeren Enden der Achse 28 sind die Laufrollen 31 und 32 drehbar gelagert. Einen zusätzlichen Auflagerpunkt für das Fahrgestell 30 auf der Dachbahn oder allgemein einer Arbeitsfläche bildet der durch das Andrückelement 40 gebildete Kontaktpunkt 23. Von der dem Andrückelement 40 zugeordneten Ecke des Dreieckrahmens des Fahrgestells 30 aus erstreckt sich ein pfostenartiger Rahmen 42 nach oben, mit dem das Gerät 20 manövrierbar ist. An einem in den Fig. 3 und 4 oberen Ende des Rahmens 42 ist ein Handgriff 44 schwenkbar befestigt. Der Handgriff 44 ist so auf die Größe einer Bedienungsperson einstellbar. Das Gerät 20 ist mit dem Rahmen 42 um die Achse 28 kippbar.

Das Andrückelement 40 umfasst eine steuerbare elektrische Heizeinrichtung, mit der die Dachbahn 70 und das Bauteil 72 oder wenigstens das Bauteil 72 und nicht die Dachbahn 70 in einen kleb- oder schweißbaren Zustand bringbar sind. Als Dachbahnen gibt es Folien, z.B. aus EPDM, die nicht durch Erhitzen in einen schweißbaren Zustand versetzbar sind. Eine solche Folie wird mit dem Bauteil 72 verklebt, das in dem hier beschriebenen Zusammenhang aus einem Teller mit einer Beschichtung 74 besteht, die durch Erhitzen des Tellers in einen klebbaren Zustand versetzt werden kann.

Die Heizeinrichtung 46 ist als eine Induktionsspule ausgebildet. Die Heizeinrichtung 46 ist über eine Aluminiumplatte 48 mit dem unteren Ende des Rahmens 42 verbunden. Die Anordnung ist dabei so getroffen, dass, wenn das Gerät 20 die in Fig. 3 gezeigte Position einnimmt, die Laufrollen 31, 32 die Arbeitsfläche in den Kontaktpunkten 21, 22 berühren und die Heizeinrichtung 46 die Arbeitsfläche vollflächig berührt und den Kontaktpunkt 23 bildet.

Ein Induktionsgenerator (nicht dargestellt) sowie eine Steuer- und Kühleinrichtung desselben (nicht dargestellt) sind in bzw. an einem Gehäuse 50 untergebracht, das in einem Abstand A oberhalb des Fahrgestells 30 an dem Rahmen 42 angebracht ist. Das Gehäuse 50 ist auf seiner Rückseite mit Kühlrippen 52 versehen. In der Ausführungsform des Gerätes 20 nach den Fig. 1 - 4 ist das Andrückelement 40 mit dem Fahrgestell 30 auf die Dachbahn absenkbar. Das Gerät 20 kann aber auch so ausgebildet sein, dass das Andrückelement 40 von dem Fahrgestell 30 aus auf die Dachbahn absenkbar ist. Außerdem kann das Andrückelement 40 mit Kompensationselementen (nicht dargestellt) versehen sein, welche ein gleichmäßiges Aufliegen des Andrückelements 40 auf der Dachbahn sicherstellen. Auf diese Varianten wird im Folgenden noch näher eingegangen.

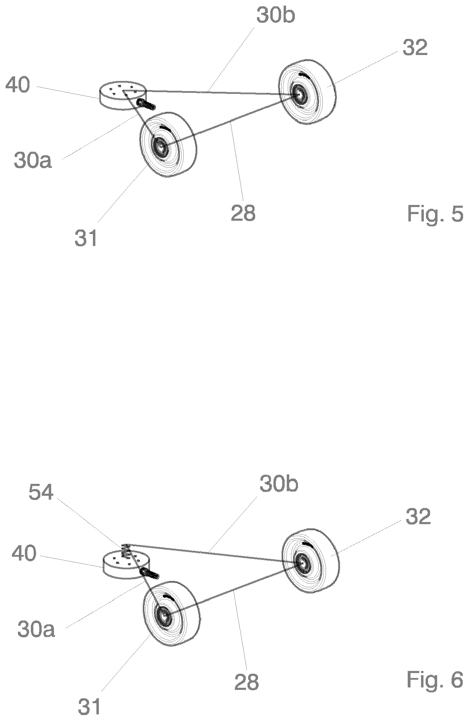

Fig. 5 zeigt in einer schematischen Darstellung als eine Einzelheit das Fahrgestell 30 des Gerätes nach den Fig. 1 - 4, das in Draufsicht ein Dreieck bildet, in dessen Ecken die beiden Laufrollen 21, 22 und das Andrückelement 40 angebracht sind.

Fig. 6 zeigt eine erste Variante der Anbringung des Andrückelements 40 an dem Fahrgestell 30 nach Fig. 5. Das Andrückelement 40 ist durch einen Gelenkkopf ein- oder mehrdimensional gegenüber dem Fahrgestell 30 beweglich. Der Gelenkkopf ist symbolisch als eine Schraubenfeder 54 dargestellt. Der Gelenkkopf wird in der Praxis als ein Kugel- oder Universalgelenk ausgebildet sein.

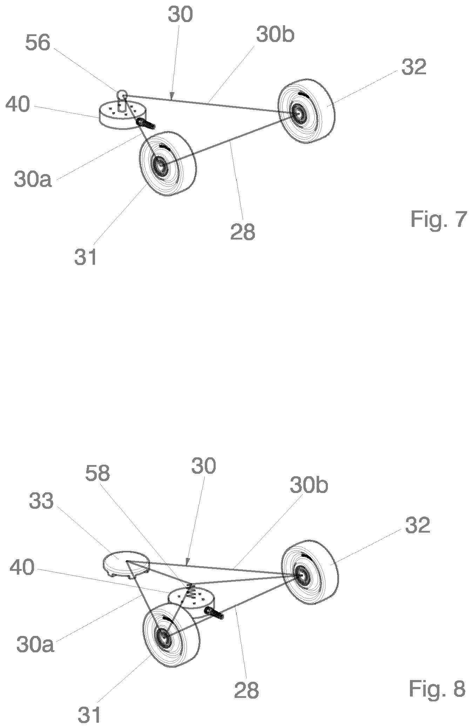

Fig. 7 zeigt eine zweite Variante der Anbringung des Andrückelements 40 an dem Fahrgestell 30 nach Fig. 5. Dabei ist der Gelenkkopf als ein Kugelgelenk 56 ausgebildet.

Fig. 8 zeigt in einer schematischen Darstellung das Fahrgestell 30, das in Draufsicht ein Dreieck bildet, in dessen Ecken die beiden Laufrollen 31, 32 und ein Gleitpunkt 33 angeordnet sind. Das Andrückelement 40 ist an einer Stelle innerhalb des Dreiecks an dem Fahrgestell 30 angebracht, wie es in Fig. 8 schematisch dargestellt ist. Der Anbringungspunkt des Andrückelements 40 wird sich zweckmäßig in dem Flächenschwerpunkt des Dreiecks befinden. Das Andrückelement 40 kann von seinem Anbringungspunkt an dem Fahrgestell 30 aus auf die Dachbahn absenkbar sein, z.B., wie angedeutet, an einer Schraubenfeder 58. Die Schraubenfeder 58 ermöglicht einen Höhenausgleich und die Aufbringung eines vertikalen Drucks von dem Andrückelement 40 aus auf die Dachbahn oder -folie 70 und weiter auf das Bauteil 72, also den in Fig. 13 dargestellten Metallteller. Wenn das Andrückelement 40 gefedert mit der Dachbahn 70 in Kontakt bringbar ist, wäre auch eine nicht dargestellte Kombination von Kugelgelenk und Schraubenfeder sehr hilfreich, denn dadurch würde die Parallelität und auch das Andrücken gewährleistet.

Die Absenkung oder, besser gesagt, der Kontakt zwischen dem Andrückelement 40 und der Dachbahn 70 und entsprechend der Kontakt zwischen der Dachbahn 70 und dem Bauteil 72 oder Teller kann zwar durch eine einfache Schraubenfeder bewerkstelligt werden, wie durch die Schraubenfeder 54 oder 58, das könnte aber auch durch ein Teleskop oder durch eine mechanische Hebelkonstruktion erfolgen.

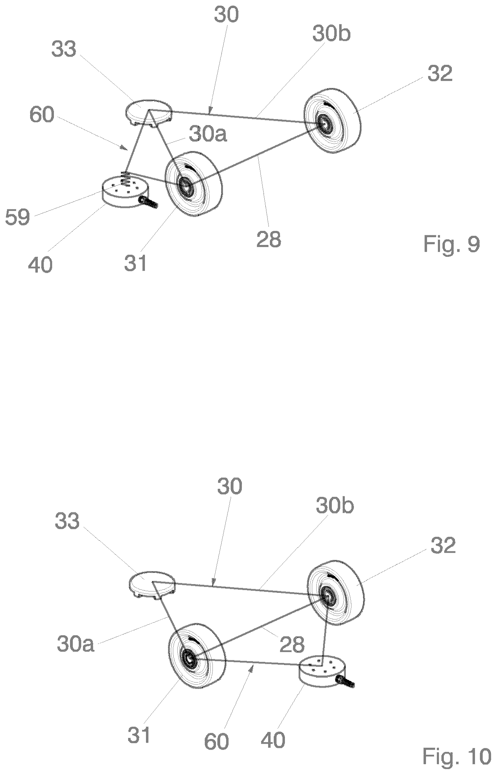

Fig. 9 zeigt eine erste Variante der Anbringung des Andrückelements 40 an dem Fahrgestell 30 nach Fig. 8. Das Fahrgestell 30, das in Draufsicht ein Dreieck bildet, in dessen Ecken die beiden Laufrollen 31, 32 und der Gleitpunkt 33 angeordnet sind, ist zusätzlich mit einer in Draufsicht dreieckigen Auslegerkonstruktion 60 versehen, an deren freier Ecke das Andrückelement 40 an einer Schraubenfeder 59 aufgehängt ist. Im Gegensatz zu der Anordnung nach Fig. 8 ist also hier das Andrückelement 40 an einer Stelle außerhalb des in Draufsicht dreieckigen Fahrgestells 30 angebracht.

Fig. 10 zeigt eine zweite Variante der Anbringung des Andrückelements 40 an dem Fahrgestell 30 nach Fig. 8. In diesem Fall ist die dreieckige Auslegerkonstruktion 60, die an ihrer freien Ecke das Andrückelement 40 trägt nicht um den Rahmenschenkel 30a schwenkbar an dem Fahrgestell 30 angelenkt, sondern um die Achse 28 schwenkbar. Der Rahmen 40 kann so mit dem Fahrgestell 30 verbunden sein, dass, wenn das Gerät um die Achse 28 gekippt wird, der Gleitpunkt 33 von der Dachbahn abgehoben wird und das Andrückelement 40 auf der Dachbahn bleibt oder das das Andrückelement 40 von der Dachbahn abgehoben wird und der Gleitpunkt 33 auf der Dachbahn bleibt. In dem Fall in welchem der Gleitpunkt 33 von der Dachbahn abgehoben wird, wird das Andrückelement 40 beim Verfahren des Gerätes auf der Dachbahn nachgeschleppt. In dem anderen Fall, in welchem das Andrückelement 40 von der Dachbahn abgehoben wird, wird bei dem Verfahren des Gerätes der Gleitpunkt 33 auf der Dachbahn nachgeschleppt.

Fig. 11 zeigt in einer schematischen Darstellung ein insgesamt mit 39 bezeichnetes Fahrgestell, das in Draufsicht ein Viereck bildet, in dessen Ecken die beiden Laufrollen 31, 32 und zwei Gleitpunkte 33, 35 angeordnet sind, wobei das Andrückelement 40 an einer Stelle innerhalb des Vierecks an dem Fahrgestell 39 angebracht ist. Diese Stelle kann sich, wie in Fig. 11 gezeigt, in dem Schnittpunkt der beiden Diagonalen des Vierecks und somit in dessen Flächenschwerpunkt befinden. Die Art der Anbringung des Andrückelements 40 an dem Fahrgestell 39 ist zwar nicht gezeigt, die Anbringung kann jedoch, wie oben bereits beschrieben, durch eine Schraubenfeder, ein Kugelgelenk, einen Gelenkkopf, ein Hebelgestänge od. dgl. erfolgen. Das Fahrgestell 39 ist wie das Fahrgestell 30 um die Achse 28 kippbar mittels des Rahmens 42, der in den schematischen Darstellungen in den Fig. 5 bis 11 nicht gezeigt ist.

Fig. 12 zeigt in einer schematischen Darstellung eine weitere bevorzugte Ausführungsform eines Gerätes 25 nach der Erfindung, bei dem das Fahrgestell als ein Ausleger 62 ausgebildet ist, der an einem Ende (in Fig. 12 dem linken Ende) mit einem Rahmen 42 und an einem entgegengesetzten Ende mit einem Bügel 64 starr verbunden ist. Das Gerät 25 ist mit dem Ausleger 62 um eine Laufrollen- und/oder -walzenachse 29 kippbar, der an seinem freien, anderen Ende das Andrückelement 40 trägt. Die Laufrollen- und/oder - walzenachse 29 trägt entweder die beiden Laufrollen 31 und 32 und/oder stattdessen eine Laufwalze wie die in Fig. 12 gezeigte Laufwalze 26.

Bei den oben beschriebenen Ausführungsformen des Gerätes 20 sind die Gleitpunkte 33, 35 jeweils als ein Abstützteller ausgebildet. Jeder Abstützteller ist an seiner Unterseite mit Erhöhungen 37 für jeweils punktförmigen Kontakt mit einer Dachbahn versehen.

Der Aufbau des Rahmens 42 nach den Fig. 1-4 und der Aufbau der Kombination aus dem Rahmen 42 und dem Bügel 64 nach Fig. 12 sowie der Abstand A, in welchem das Gehäuse 50 mit der Steuer- und Kühleinrichtung oberhalb des Fahrgestells 30 oder des das Fahrgestell bildenden Auslegers 62 angeordnet sind, sind so gewählt, dass, wenn das Gerät 20 bzw. 25 nicht gekippt ist, das Andrückelement 40 mit so großer Kraft auf eine Dachbahn 70 (Fig. 13) drückt, dass jeglicher Luftspalt zwischen der Unterseite der Dachbahn 70 und der Oberseite einer Beschichtung 74 eines Tellers oder Bauteils 72 beseitigt wird und so stets ein gutes Klebe- oder Schweißergebnis erzielt wird. Damit nicht nach einem Klebe- oder Schweißvorgang das Gerät 21, 25 in seiner dabei eingenommenen Position verbleiben muss, bis die Klebe- oder Schweißstelle ausreichend ausgehärtet oder verfestigt ist, kippt die Bedienungsperson das Gerät sofort zurück in eine Fahrstellung und fährt mit dem Gerät weiter in die nächste Position, in der die Dachbahn 70 mit einem Teller oder Bauteil 72 zu verschweißen ist. Damit die Klebung oder Schweißung trotzdem genügend Zeit zum Abkühlen und Verfestigen hat, wird, wie oben bereits geschildert, ein an einer separaten Stange befestigter Magnet durch die Bedienungsperson in der Position auf die Dachbahn 70 aufgesetzt, in der diese gerade mit dem unter ihr befindlichen Teller oder Bauteil 72 verklebt oder verschweißt worden ist.

Fig. 13 zeigt teilweise in Seitenansicht und teilweise im Schnitt den Einsatz des Andrückelements 40 bei dem Verschweißen einer Dachbahn 70 mit einer Beschichtung 74 auf einem Bauteil 72, bei dem es sich um einen Metallteller handelt, mit dem eine Dämmstoffschicht 78 auf einem Dachunterbau 76 befestigt ist. In Fig. 13 ist eine flexible Durchführung für ein nicht dargestelltes Anschlusskabel der Heizeinrichtung 46 in dem Andrückelement 40 mit 80 bezeichnet.

### Bezugszeichenliste

- 20: Gerät
- 21: Kontaktpunkt
- 22: Kontaktpunkt
- 23: Kontaktpunkt
- 24: Kontaktlinie
- 25: Gerät
- 26: Laufwalze
- 28: Laufrollenachse
- 29: Laufrollen- und / oder -walzenachse
- 30: Fahrgestell
- 30 a: Rahmenschenkel
- 30 b: Rahmenschenkel
- 31: Laufrolle
- 32: Laufrolle
- 33: Gleitpunkt
- 34: Traverse
- 35: Gleitpunkt
- 36: Auslösepedal
- 37: Erhöhungen
- 39: Fahrgestell
- 40: Andrückelement
- 42: Rahmen
- 43: Rahmen
- 44: Handgriff
- 46: Heizeinrichtung
- 48: Aluminiumplatte
- 50: Gehäuse
- 52: Kühlrücken
- 54: Schraubenfeder
- 56: Kugelgelenk
- 58: Schraubenfeder
- 59: Schraubenfeder
- 60: Auslegerkonstruktion
- 62: Ausleger
- 64: Bügel
- 70: Dachbahn
- 72: Bauteil
- 74: Beschichtung
- 76: Dachunterbau
- 78: Dämmstoffschicht
- 80: Kabeldurchführung

- A: Abstand

## Patentansprüche

1. Einteiliges Gerät zum Verkleben oder Verschweißen einer Dachbahn (70), insbesondere auf einem Flachdach,
- mit einem Fahrgestell (30, 39) zum Abstützen des Gerätes (20; 25) auf der Dachbahn (70) in einem Kontaktpunkt (23), der durch ein Andrückelement (40) zum Andrücken der Dachbahn (70) an ein mit ihr zu verklebendes oder zu verschweißendes Bauteil (72) gebildet ist, und in wenigstens einem weiteren Kontaktpunkt (21, 22) und/oder einer Kontaktlinie (24), die durch eine Laufrolle (31, 32) bzw. -walze (26) zum Verfahren des Gerätes (20,25) gebildet sind,
- mit einer steuerbaren elektrischen Heizeinrichtung, mit der die Dachbahn (70) und das Bauteil (72) in einen kleb- oder schweißbaren Zustand bringbar sind, und
- mit einem sich von dem Fahrgestell (30, 39) nach oben erstreckenden Rahmen (42), mit dem das Gerät (20, 25) manövrierbar ist,
- wobei das Andrückelement (40) die als eine Induktionsspule ausgebildete Heizeinrichtung (46) umfasst, mit der ein das Bauteil (72) bildender, mit einem kleb- oder schweißbaren Belag versehener Metallteller erhitzbar ist,
- wobei ein Induktionsgenerator sowie eine Steuer- und Kühleinrichtung desselben in bzw. an einem Gehäuse (50) angebracht sind, das mit Abstand (A) oberhalb des Fahrgestells (30, 39) an dem Rahmen (42) angebracht ist, und
- wobei das Gerät (20) mit dem Rahmen (42, 43) um eine Laufrollen- und/oder - walzenachse (28, 29) kippbar ist und in gekipptem Zustand verfahrbar ist.

2. Gerät nach Anspruch 1, **dadurch gekennzeichnet, dass** das Andrückelement (40) durch einen Gelenkkopf ein- oder mehrdimensional gegenüber dem Fahrgestell (30, 39) beweglich ist.

3. Gerät nach einem der vorhergehenden Ansprüche, **dadurch gekennzeichnet, dass** das Andrückelement (40) mit Kompensationselementen versehen ist, welche ein gleichmäßiges Aufliegen des Andrückelements (40) auf der Dachbahn (70) sicherstellen.

4. Gerät nach einem der vorhergehenden Ansprüche, **dadurch gekennzeichnet, dass** das Andrückelement (40) gefedert mit der Dachbahn (70) in Kontakt bringbar ist.

5. Gerät nach einem der vorhergehenden Ansprüche, **dadurch gekennzeichnet, dass** das Andrückelement (40) mit dem Fahrgestell (30, 39) auf die Dachbahn (70) absenkbar ist.

6. Gerät nach einem der Ansprüche 1 bis 4, **dadurch gekennzeichnet, dass** wenigstens einer der Kontaktpunkte als ein Gleitpunkt (33) ausgebildet ist und dass das Andrückelement (40) von dem Fahrgestell (30, 39) aus auf die Dachbahn (70) absenkbar ausgebildet ist.

7. Gerät nach Anspruch 6, **dadurch gekennzeichnet, dass** das Fahrgestell (30, 39) in Draufsicht ein Dreieck bildet, in dessen Ecken zwei Laufrollen (31, 32) und das Andrückelement (40) angeordnet sind.

8. Gerät nach Anspruch 6, **dadurch gekennzeichnet, dass** das Fahrgestell (30, 39) in Draufsicht ein Dreieck bildet, in dessen Ecken zwei Laufrollen (31, 32) und der Gleitpunkt (33) angeordnet sind.

9. Gerät nach Anspruch 6 oder 7, **dadurch gekennzeichnet, dass** das Fahrgestell (39) in Draufsicht ein Viereck bildet, in dessen Ecken zwei Laufrollen (31, 32) und zwei Gleitpunkte (33, 35) angeordnet sind.

10. Gerät nach Anspruch 8, **dadurch gekennzeichnet, dass** das Andrückelement (40) an einer Stelle innerhalb des Dreiecks an dem Fahrgestell (30) angebracht ist.

11. Gerät nach Anspruch 8, **dadurch gekennzeichnet, dass** das Andrückelement (40) an einer Stelle außerhalb des Dreiecks an dem Fahrgestell (30) angebracht ist.

12. Gerät nach Anspruch 9, **dadurch gekennzeichnet, dass** das Andrückelement (40) an einer Stelle innerhalb des Vierecks an dem Fahrgestell (39) angebracht ist.

13. Gerät nach Anspruch 5, **dadurch gekennzeichnet, dass** das Fahrgestell als ein Ausleger (62) ausgebildet ist, der an einem Ende mit dem Rahmen (42) um die Laufrollen- und/oder -walzenachse (28, 29) schwenkbar ist und an seinem freien, anderen Ende das Andrückelement (40) trägt.

14. Gerät nach Anspruch 13, **dadurch gekennzeichnet, dass** die Laufrollen- und/oder - walzenachse (28, 29) wenigstens eine Laufrolle (31) und/oder wenigstens eine Laufwalze (26) trägt.

15. Gerät nach einem der Ansprüche 6 bis 12, **dadurch gekennzeichnet, dass** der oder jeder Gleitpunkt (30, 35) als ein Abstützteller ausgebildet ist.

16. Gerät nach Anspruch 15, **dadurch gekennzeichnet, dass** der Abstützteller an seiner Unterseite mit Erhöhungen (37) für jeweils punktförmigen Kontakt mit einer Dachbahn (70) versehen ist.

17. Gerät nach einem der vorhergehenden Ansprüche, **dadurch gekennzeichnet, dass** die Induktionsspule mit einer Positionssuchspule kombiniert ist.

## Claims

1. A one-piece device for bonding or welding a roof membrane (70), in particular to a flat roof,
- comprising an undercarriage (30, 39) for supporting the device (20; 25) on the roof membrane (70) in a contact point (23) which is formed by a pressing element (40) for pressing the roof membrane (70) onto a component (72) to be adhesively bonded or to be welded thereto, and in at least one further contact point (21, 22) and/or a contact line (24) which are formed by a caster (31, 32) and/or roller (26) for moving the device (20, 25),
- comprising a controllable electrical heating apparatus, the roof membrane (70) and the component (72) being able to be brought into an adhesively bondable or weldable state thereby, and
- comprising a frame (42) extending upwardly from the undercarriage (30, 39), the device (20, 25) being manoeuvrable thereby,
- wherein
the pressing element (40) which comprises a heating apparatus (46) configured as an induction coil, a metal plate forming the component (72) and provided with an adhesively bondable or weldable layer being heatable thereby,
- wherein
an induction generator and a control and cooling apparatus thereof are attached in and/or on a housing (50) which is attached to the frame (42) at a distance (A) above the undercarriage (30, 39), and
- wherein
the device (20) is tiltable with the frame (42, 43) about a caster and/or roller axis (28, 29) and is movable in the tilted state.

2. The device according to Claim 1, **characterised in that** the pressing element (40) is movable one-dimensionally or multi-dimensionally relative to the undercarriage (30, 39) by an articulated head.

3. The device according to one of the preceding claims, **characterised in that** the pressing element (40) is provided with compensation elements which ensure that the pressing element (40) bears uniformly against the roof membrane (70).

4. The device according to one of the preceding claims, **characterised in that** the pressing element (40) is able to be brought into contact with the roof membrane (70) in a resilient manner.

5. The device according to one of the preceding claims, **characterised in that** the pressing element (40) is lowerable with the undercarriage (30, 39) onto the roof membrane (70).

6. The device according to one of Claims 1 to 4, **characterised in that** at least one of the contact points is configured as a sliding point (33) and **in that** the pressing element (40) is configured to be lowerable from the undercarriage (30, 39) onto the roof membrane (70).

7. The device according to Claim 6, **characterised in that** the undercarriage (30, 39) in plan view forms a triangle, two casters (31, 32) and the pressing element (40) being arranged in the corners thereof.

8. The device according to Claim 6, **characterised in that** the undercarriage (30, 39) in plan view forms a triangle, two casters (31, 32) and the sliding point (33) being arranged in the corners thereof.

9. The device according to Claim 6 or 7, **characterised in that** the undercarriage (39) in plan view forms a square, two casters (31, 32) and two sliding points (33, 35) being arranged in the corners thereof.

10. The device according to Claim 8, **characterised in that** the pressing element (40) is attached to the undercarriage (30) at a point inside the triangle.

11. The device according to Claim 8, **characterised in that** the pressing element (40) is attached to the undercarriage (30) at a point outside the triangle.

12. The device according to Claim 9, **characterised in that** the pressing element (40) is attached to the undercarriage (39) at a point inside the square.

13. The device according to Claim 5, **characterised in that** the undercarriage is configured as an extension arm (62) which is pivotable at one end with the frame (42) about the caster and/or roller axis (28, 29) and bears the pressing element (40) at its free other end.

14. The device according to Claim 13, **characterised in that** the caster and/or roller axis (28, 29) bears at least one caster (31) and/or at least one roller (26).

15. The device according to one of Claims 6 to 12, **characterised in that** the or each sliding point (30, 35) is configured as a supporting plate.

16. The device according to Claim 15, **characterised in that** the supporting plate is provided on its lower face with raised portions (37) respectively for contact with a roof membrane (70) in a punctiform manner.

17. The device according to one of the preceding claims, **characterised in that** the induction coil is combined with a position exploring coil.

## Revendications

1. Appareil en une seule partie destiné à coller ou souder une membrane pour toiture (70), notamment sur un toit plat,
- avec un châssis (30, 39) pour supporter l'appareil (20; 25) sur la membrane pour toiture (70) dans un point de contact (23), qui est formé par un élément presseur (40) pour presser la membrane pour toiture (70) sur un composant (72) à coller ou à souder et dans au moins un autre point de contact (21, 22) et/ou une ligne de contact (24) qui sont formés par un galet de roulement (31, 32) ou cylindre de roulement (26) pour déplacer l'appareil (20, 25),
- avec un système de chauffage électrique pouvant être commandé, avec lequel la membrane pour toiture (70) et le composant (72) peuvent être mis dans un état de collage ou de soudage, et
- avec un cadre (42) s'étendant du châssis (30, 39) vers le haut avec lequel l'appareil (20, 25) peut être manoeuvré,
- l'élément presseur (40) qui comprenant un système de chauffage (46) constitué sous la forme d'une bobine d'inductance avec lequel un disque métallique formant le composant (72), muni d'un revêtement pouvant être collé ou soudé, peut être chauffé,
- un générateur à induction ainsi qu'un système de commande et de refroidissement de ce même système étant montés dans ou sur un boîtier (50) qui est monté sur le cadre (42) à distance (A) au-dessus du châssis (30, 39), et
- l'appareil (20) avec le cadre (42, 43) pouvant être basculé autour d'un axe de galet de roulement et/ou de cylindre (28, 29) et pouvant être déplacé à l'état basculé.

2. Appareil selon la revendication 1, **caractérisé en ce que** l'élément presseur (40) est mobile par une tête articulée de manière unidimensionnelle ou pluridimensionnelle par rapport au châssis (30, 39).

3. Appareil selon l'une quelconque des revendications précédentes, **caractérisé en ce que** l'élément presseur (40) est muni d'éléments de compensation, lesquels assurent une application sans à-coups de l'élément presseur (40) sur la membrane pour toiture (70).

4. Appareil selon l'une quelconque des revendications précédentes, **caractérisé en ce que** l'élément presseur (40) peut être mis en contact par ressort avec la membrane pour toiture (70).

5. Appareil selon l'une quelconque des revendications précédentes, **caractérisé en ce que** l'élément presseur (40) peut être abaissé avec le châssis (30, 39) sur la membrane pour toiture (70).

6. Appareil selon l'une quelconque des revendications 1 à 4, **caractérisé en ce qu'**au moins un des points de contact est constitué comme un point de coulissement (33) et **en ce que** l'élément presseur (40) est constitué pouvant descendre du châssis (30, 39) sur la membrane pour toiture (70).

7. Appareil selon la revendication 6, **caractérisé en ce que** le châssis (30, 39) forme un triangle en vue de dessus dans les angles duquel sont disposés deux galets de roulement (31, 32) et l'élément presseur (40).

8. Appareil selon la revendication 6, **caractérisé en ce que** le châssis (30, 39) forme un triangle en vue de dessus dans les angles duquel sont disposés deux galets de roulement (31, 32) et le point de coulissement (33).

9. Appareil selon la revendication 6 ou 7, **caractérisé en ce que** le châssis (39) forme un quadrilatère en vue de dessus dans les angles duquel sont disposés deux galets de roulement (31, 32) et deux points de coulissement (33, 35).

10. Appareil selon la revendication 8, **caractérisé en ce que** l'élément presseur (40) est monté sur le châssis (30) à un endroit à l'intérieur du triangle.

11. Appareil selon la revendication 8, **caractérisé en ce que** l'élément presseur (40) est monté sur le châssis (30) à un endroit à l'extérieur du triangle.

12. Appareil selon la revendication 9, **caractérisé en ce que** l'élément presseur (40) est monté sur le châssis (39) à un endroit à l'intérieur du quadrilatère.

13. Appareil selon la revendication 5, **caractérisé en ce que** le châssis est constitué comme un bras (62) pouvant pivoter sur une extrémité avec le cadre (42) autour de l'axe des galets de roulement et/ou de cylindre (28, 29) et porte l'élément presseur (40) sur son autre extrémité libre.

14. Appareil selon la revendication 13, **caractérisé en ce que** l'axe des galets de roulement et/ou de cylindre (28, 29) porte au moins un galet de roulement (31) et/ou au moins un cylindre de roulement (26).

15. Appareil selon l'une quelconque des revendications 6 à 12, **caractérisé en ce que** le ou chaque point de coulissement (30, 35) est constitué comme un plateau de support.

16. Appareil selon la revendication 15, **caractérisé en ce que** le plateau de support est doté sur sa face inférieure de reliefs (37) pour un contact respectivement ponctuel avec une membrane pour toiture (70).

17. Appareil selon l'une quelconque des revendications précédentes, **caractérisé en ce que** la bobine d'inductance est combinée avec une bobine de détection de position.
